# EUROPÄISCHE PATENTANMELDUNG

(11) **EP 1 593 928 A1**
(43) Veröffentlichungstag der Anmeldung: **09.11.2005**
(21) Anmeldenummer: 05101325.8
(22) Anmeldetag: 22.02.2005
(51) Int. Cl.: G01B 5/012, G01B 7/012

(54) **Vorrichtung zum Vermessen von Werkstückbohrungen**

(30) Priorität: 03.05.2004 DE 102004021539
(71) Anmelder: ROBERT BOSCH GMBH, 70442 Stuttgart (DE)
(72) Erfinder: Hohmann, Eugen, 96191, Viereth-Trunstadt (DE)

(57) **Zusammenfassung**

Eine Vorrichtung (1) zum Vermessen von Werkstückbohrungen (2), insbesondere von Bohrungen mit Durchmessern von ca. 50 bis ca. 500 µm, umfasst eine mittels eines piezoelektrischen Stellantriebs (4) in x-y-Richtung verfahrbare Messelektrode (3), deren Durchmesser kleiner als der Durchmesser der zu vermessenden Bohrung (2) ist, eine Steuereinheit (7) zum Verfahren der in z-Richtung in die Bohrung (2) eintauchenden Messelektrode (3) in der x-y-Ebene, bis ein elektrischer Stromkreis zwischen Messelektrode (3) und Werkstück (8) geschlossen ist, und eine Auswerteeinheit (7) zum Ermitteln der Bohrungsgeometrie aus den x-y-Verfahrwegen der Messelektrode (3).

## Beschreibung

### Stand der Technik

Die Erfindung geht aus von einer Vorrichtung zum Vermessen von Werkstückbohrungen.

Das Vermessen kleiner Düsenbohrungen (50 bis 500 µm Durchmesser) von z.B. Kraftstoffeinspritzdüsen erfolgt bisher mit optischen Verfahren (Auflicht). Dabei wird die Bohrungswand im Ein- und Auslaufbereich der Düsenbohrungen manuell auf die Ein- und Auslaufkanten fokussiert und vermessen, was pro Düsenbohrung ca. 4 Minuten dauert. Diese manuelle Fokussierung und Vermessung, die nur in den durch die Ein- und Auslaufkanten definierten Ebenen möglich ist, führt allerdings zu subjektiven Messergebnissen.

### Vorteile der Erfindung

Die erfindungsgemäße Messvorrichtung zum Vermessen von Werkstückbohrungen mit den Merkmalen des Patentanspruchs 1 hat folgende Vorteile:
- Automatisierung des Messablaufs;
- hohe Zeiteinsparung, da der piezoelektrische Stellantrieb das Vermessen der Werkstückbohrungen innerhalb von wenigen Sekunden ermöglicht;
- objektive Messdatenerfassung, wobei der Messbereich beliebig programmierbar ist;
- beliebige Wahl bzw. Variation der Messebene.

### Zeichnung

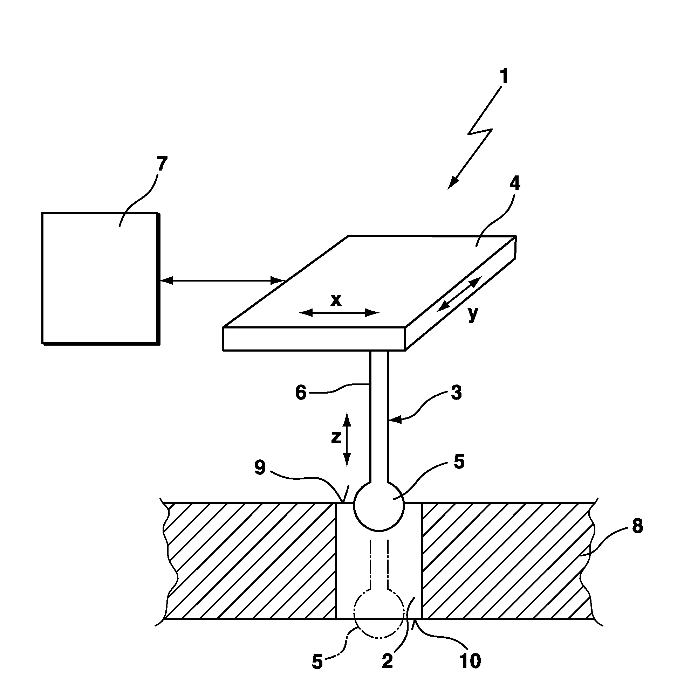

Ein Ausführungsbeispiel der erfindungsgemäßen Messvorrichtung ist in der Zeichnung dargestellt und wird in der nachfolgenden Beschreibung näher erläutert.

Die einzige Figur zeigt den Prinzipaufbau der erfindungsgemäßen Messvorrichtung.

### Beschreibung des Ausführungsbeispiels

Die erfindungsgemäße Messvorrichtung **1** dient zum Vermessen von kleinen Werkstückbohrungen **2** (Bohrungsdurchmesser ca. 50 bis ca. 500 µm) mittels einer Hartmetall-Messelektrode **3.** Die Messelektrode 3 ist in x-y- Richtung mittels eines piezoelektrischen Stellantriebs **4,** der in der Figur schematisch als Piezo-x-y-Arbeitstisch dargestellt ist, verfahrbar und hat einen Durchmesser kleiner als der Durchmesser der zu vermessenden Bohrung 2. Die Messelektrode 3 ist in z-Richtung ebenfalls mittels eines weiteren piezoelektrischen Antriebs (nicht gezeigt) verfahrbar. Der Messkopf **5** der Messelektrode 3 ist gegenüber dem Elektrodenschaft **6** kugelförmig verbreitert.

Die Messvorrichtung1 umfasst weiterhin eine Steuer- und Auswerteeinheit 7 zum Verfahren der Messelektrode 3 in der x-y-Ebene und zum Ermitteln der Bohrungsgeometrie aus den x-y-Verfahrwegen der Messelektrode 3.

### Die Bohrung 2 wird wie folgt vermessen:

Der Messkopf 5 der Messelektrode 3 wird mittels eines Stellantriebes (nicht gezeigt) in die Bohrung 2 hinein bis in die durch die Oberkante (Düseneinlaufkante) 9 der zu vermessenden Bohrung 2 definierte Messebene gefahren und zwischen Messelektrode 3 und Werkstück 8 eine Messspannung von 2,5 V angelegt. Dann wird die Messelektrode 3 mittels des piezoelektrischen Stellantriebs 4 in der x-y-Ebene verfahren, z.B. in der Figur nach links bis zur Anlage an der linksseitigen Wand der Bohrung 2. Sobald der Messkopf 5 diese Wand berührt, wird der Stromkreis zwischen Messelektrode 3 und Werkstück 8 geschlossen und dadurch die Verfahrbewegung der Messelektrode 3 gestoppt. Danach wird die Messelektrode 3 nach rechts bis zur rechtsseitigen Anlage an der Wand der Bohrung 2 gefahren. Die Auswerteeinheit 7 berechnet aus den beiderseitigen Verfahrwegen der Messelektrode 3 in x-Richtung und dem Durchmesser des Messkopfes 5 die Breite der Bohrung 2 in x-Richtung. Diese Messung wird in der y-Richtung, gegebenenfalls auch noch in weiteren Richtungen, wiederholt. Aus den Messergebnissen ermittelt die Auswerteeinheit 7 die Bohrungsgeometrie in dieser Messebene, und der Messkopf 5 wird mittels des piezoelektrischen Stellantriebs 4 mittig zur Bohrung 2 positioniert.
Mittels des weiteren piezoelektrischen Antriebs wird der Messkopf 5 tiefer in die Bohrung 2 hinein in eine andere Messebene, z.B. in die durch die Unterkante (Düsenauslaufkante) **10** der Bohrung 2 definierte Messebene, verfahren, wie in der Figur gestrichpunktet angedeutet ist. Der oben beschriebene Messvorgang wird wiederholt und daraus die Bohrungsgeometrie in dieser Messebene ermittelt.
Auf diese Weise kann auf der gesamten Bohrungslänge die Bohrung 2 vermessen und ihre Bohrungsgeometrie ermittelt werden.

Bevorzugt ist die Messvorrichtung 1 in eine Vorrichtung zum Erodieren von Bohrungen 2 in ein Werkstück 8 integriert, wobei die Messelektrode 3 durch Anlegen einer höheren Spannung gleichzeitig als Elektrode der Erodiervorrichtung verwendet wird.

## Patentansprüche

1. Vorrichtung (1) zum Vermessen von Werkstückbohrungen (2), insbesondere von Bohrungen mit Durchmessern von ca. 50 bis ca. 500 µm,
mit einer mittels eines piezoelektrischen Stellantriebs (4) in x-y-Richtung verfahrbaren Messelektrode (3), deren Durchmesser kleiner als der Durchmesser der zu vermessenden Bohrung (2) ist,
mit einer Steuereinheit (7) zum Verfahren der in z-Richtung in die Bohrung (2) eintauchenden Messelektrode (3) in der x-y-Ebene, bis ein elektrischer Stromkreis zwischen Messelektrode (3) und Werkstück (8) geschlossen ist, und
mit einer Auswerteeinheit (7) zum Ermitteln der Bohrungsgeometrie aus den x-y-Verfahrwegen der Messelektrode (3).

2. Messvorrichtung nach Anspruch 1, **dadurch gekennzeichnet, dass** die Messelektrode (3) auch in z-Richtung mittels eines piezoelektrischen Stellantriebs (4) verfahrbar ist.

3. Messvorrichtung nach Anspruch 1 oder 2, **dadurch gekennzeichnet, dass** der Messkopf (5) der Messelektrode (3) gegenüber dem Elektrodenschaft (6) verbreitert ist.

4. Messvorrichtung nach Anspruch 3, **dadurch gekennzeichnet, dass** der Messkopf (5) der Messelektrode (3) kugelförmig ausgebildet ist.

5. Messvorrichtung nach einem der vorhergehenden Ansprüche, **dadurch gekennzeichnet, dass** die Messvorrichtung (1) in eine Vorrichtung zum Erodieren von Bohrungen (2) in ein Werkstück (8) integriert ist und die Messelektrode (3) gleichzeitig die Elektrode der Erodiervorrichtung ist.
